# EUROPEAN PATENT APPLICATION

(11) **EP 2 036 622 A1**
(43) Date of publication of application: **18.03.2009**
(21) Application number: 07017963.5
(22) Date of filing: 13.09.2007
(51) Int. Cl.: B07C 5/34, B65B 57/02

(54) **Vision means for quality increase of confectionary**

(71) Applicant: CFS Weert B.V., 6006 RV Weert (NL)
(72) Inventor: De Roo, Ronald Lambertus Joseph Hendrikus, 5507 MG Veldhoven (NL)
(74) Representative: Wolff, Felix

(57) **Abstract**

The present invention is related to a confectionary production and/or wrapping machine.

## Description

The present invention is related to a confectionary production and/or wrapping machine.

These machines are known from the state of the art and produce confectionary, e. g. lollipops at very high rates. These confectionaries are afterwards in many cases wrapped into paper or plastic films. An increase of the quality of the products themselves as well as their wrapping is a constant demand in this industry.

It was therefore the objective of the present invention to provide a confectionary production and/or wrapping machine, which maintains or increases a constant level of quality.

This problem is solved by a confectionary production and/or wrapping machine that comprises means to analyze a product and/or its wrapping.

The invention is related to a confectionary production and/or wrapping machine. Such machines are known from the state of the art. The present invention especially relates to a machine for the production and/or the wrapping of lollipops.

According to the present invention, this machine comprises means to analyze a product, such as lollipops and/or the wrapping of these products.

These means can, for example, analyze whether the product has a correct surface and/or contour. Furthermore, these means can analyze whether the colour of the product is appropriate. Furthermore, these analyzing means can analyze whether the volume, the shape and/or the content of the product is correct. For example, lollipops can comprise a chewing gum and the means to analyze the product can check whether a chewing gum exists and/or whether the chewing gum has the right size and/or consistency.

Furthermore, the means to analyze the product can check whether the product is wrapped and, if it is wrapped whether the wrapping has been carried out correctly, which means whether the correct wrapping material is used and whether the product is for example wrapped in its entirety. Furthermore, the means to analyze the wrapping can check whether sealings of the wrapping material which might be present are as desired. The wrapping material can be a single or a double film. The wrapping material can be formed; i.e. wrapped around the product, twisted and/or folded. This twisting and/or folding can be secured by a seal or the like. The means can check the quality of these folding- and/or operations is adequately carried out.

If the confectionary product is labeled, the means to analyze the product can check whether a label is present and if yes, whether it is the right label.

Preferably, the means to analyze the product and/or its wrapping provide a signal which is used to control a sorting process. The sorting can be carried out such, that products and/or their wrapping, which do not meet a certain standard are sorted out. Furthermore, if different products are produced on one machine, the signal can be used to sort the products into certain groups after their production. Different products according to the present invention are products with a different consistency, shape and/or wrapping.

The means to analyze the product can be any means known by a person skilled in the art which are capable of analyzing a certain property of a product and/or its wrapping. Preferably, the means are vision systems, such as a camera, a radiation based surface scanner, such as a laser scanner, preferably a 2D-laser scanner, and/or radiation based volume scanners, for example roentgen sensors. These means determine for example a dimension, a shape, a colour, a surface structure, a temperature, a wrapping, a label, which is then preferably compared with a reference and based on this comparison even more preferably a sorting takes place.

The determined values are preferably stored in a data base associated with the inventive machine.

The analysis can be two-dimensional as well as three-dimensional.

According to a preferred embodiment of the present invention, a property is measured by the means to analyze a product and compared to another measurement at the same product and/or a reference value and that the sorting of the products is made based on the outcome of this comparison.

Preferably, the inventive machine comprises an illumination system, such as a back lightning system for the product and/or the wrapping. This preferred embodiment is especially useful, if the means to analyze are a camera, because the contours of the product and/or the wrapping are enhanced by the backlight.

Preferably, the products are transported by transportation means which transport the products passed the means to analyze. While the products are in the vicinity of the means to analyze, the respective property is measured. The properties are measured preferably during the motion of the product.

These transportation means can comprise clamping means, which fix the product to the transportation means.

Preferably, these clamping means are used as means to activate the means to analyze, so that the analysis is carried out, while the product is in the vicinity of the means to analyze. Furthermore or alternatively, the clamping means can be used as a reference-location for the analyzing means, so that the analyzing means know where the analysis should be carried out.

Preferably, the position of the transportation means is tracked during its motion, especially if they carry the product, which should be sorted out. Due to the tracking of position the clamping means, the inventive machine knows, when the clamping machines are, for example, on top of a disposal bin, so that they can release the false product into the disposal bin. In case of a stop and a restart of the inventive machine it is also important that the location of the clamping means with false products are known.

The invention is now explained according to figures 1 to 4. These explanations do not limit the scope of protection.
- **Figure 1**: shows a front view of the inventive machine.
- **Figure 2**: shows a side view of the inventive machine.
- **Figure 3**: shows a wrapped lollipop clamped by clamping means.
- **Figure 4**: shows a non-wrapped lollipop clamped by the clamping means.

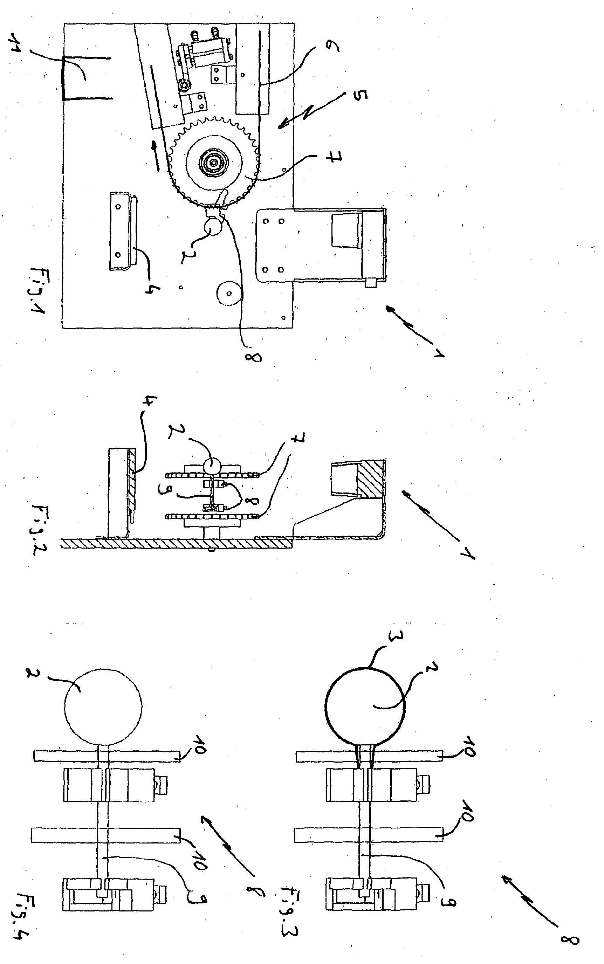

**Figure 1** shows the inventive machine, which comprises transportation means 5. These transportation means 5 are in the present example sprockets 7 which drive chains 6. On these chains 6 clamping means 8 are arranged, which clamp a product, in the present case the stick 9 of a lollipop 2. The lollipops 2 are transported by the transportation machines continuously as depicted by the arrow. During their transportation, they are transported passed means to analyze them, in the present example, a camera 1. Below the product and the camera an illumination system 4, a backlight, is arranged, which illuminates the product as well as the stick in order to improve their contours for the camera 1. The lollipop 2 is located between the illumination system 4 and the camera 1.

**Figure 2** shows a side view of the machine according to figure 1. It can be clearly seen, that there are two sprockets 7 which drive chains (not depicted), to which several clamping means 8 are fixed.

**Figure 3** shows the clamping means 8, which clamp the stick 9 of a lollipop 2, which is wrapped by a plastic film 3. Furthermore, in this picture, two measuring areas 10 can be seen. One is in the vicinity of the unwrapped stick and one is in the vicinity of the lollipop where the wrapping material is twisted around the stick and sealed. In these measuring areas, the camera and a software combined with the camera measures the widths, respectively. If the width closed to the lollipop is not larger than the width of the stick, the conclusion is drawn by the software that the lollipop is not wrapped and has to be sorted out. In the present case the width measured near the lollipop is larger than the width of the stick, so that it is concluded that the lollipop is wrapped an consequently considered to be a "good" product. However, not only the presence of a wrapping but also the quality of the sealing can be, for example, measured by the camera 1. If the width measure close to the lollipop is larger than the width of the stick, but does not exceed a certain value, the conclusion can be drawn, that the twisting is too tight and/or that the sealing of the twisting is too intense. These lollipops are also sorted out, because they cannot be easily opened by the customer. Sorted out are also lollipops which comprise a width close to the lollipop which is too large. In this case a wrapping is present but the twisting of the wrapping material and/or its sealing is incomplete so that it is likelihood that the wrapping will fall off is high.

**Figure 4** shows a lollipop which is not wrapped. The inventive machine will realise, that in both measurement areas the measured width is the same and will conclude that the lollipop is unwrapped. Consequently, the position of this clamping means is tracked and as soon as it is located over bin 11 (please compare figure 1), the lollipop is released into the bin.

The person skilled in the art understands that the machine cannot only measure whether a wrapping is in place and whether the wrapping is carried out correctly. The analyzing means 1 can also analyze whether the product has a correct shape and/or color. The same is true for the wrapping material. The camera can analyze whether correct wrapping material has been used and whether a label is present, if needed. In case that the analyzing means 1 are not a camera, but for example roentgen means, also the interior of the product can be analyzed.

Furthermore, the analyzing means can comprise a temperature measurement to measure whether the product has a correct temperature.

### List of reference signs:

- 1: Analyzing means, vision system, radiation-scanner, radiation sensor
- 2: product
- 3: wrapping
- 4: illumination system
- 5: transportation means
- 6: chain
- 7: sprocket
- 8: clamping means
- 9: stick
- 10: measurement area

## Claims

1. Confectionary production- and/or wrapping-machine, **characterized in, that** it comprises means (1) to analyze a product (2) and/or its wrapping (3).

2. Confectionary production- and/or wrapping-machine according to claim 1, **characterized in, that** the means (1) provide a signal, which is used to control a sorting process.

3. Confectionary production- and/or wrapping-machine according to claim 2, **characterized** that bad products and/or bad wrapped products are sorted out.

4. Confectionary production- and/or wrapping-machine according to claim 2 or 3, **characterized in, that** the products are sorted according to the signal of the means (1).

5. Confectionary production- and/or wrapping-machine according to one of the preceding claims, **characterized in that** the means (1) is a vision system, a radiation based surface-scanner and/or a radiation based volume-scanner.

6. Confectionary production- and/or wrapping-machine according to one of the preceding claims, **characterized in, that** the analysis is 2 or 3-D.

7. Confectionary production- and/or wrapping-machine according to one of the preceding claims, **characterized in, that** the analyzing means (1) measure at least one property of the product or the wrapping.

8. Confectionary production- and/or wrapping-machine according to claim 7, **characterized in, that** the measured property is compared to another measured property or a reference value and that the sorting is made based on the outcome of this comparison.

9. Confectionary production- and/or wrapping-machine according to one of the preceding claims, **characterized in, that** it comprises an illumination system (4) for the product and/or the wrapping.

10. Confectionary production- and/or wrapping-machine according to one of the preceding claims, **characterized in, that** the product is transported by transportation means (5, 7, 8).

11. Confectionary production- and/or wrapping-machine according to claim 9, **characterized in, that** the transportation means (8) are taken as means to activate the analyzing means.

12. Confectionary production- and/or wrapping-machine according to one of claims 10 or 11, **characterized in, that** the location of the transportation means (8) is tracked.

13. Confectionary production- and/or wrapping-machine according to one of claims 10 - 12, **characterized in, that** false products are released over a disposal bin:
